Europäisches Patentamt

European Patent Office

Office européen des brevets

(11) Numéro de publication: **0 466 215 A2**

## DEMANDE DE BREVET EUROPEEN

(21) Numéro de dépôt: 91116529.8

(22) Date de dépôt: 11.03.87

(51) Int. Cl.5: **B01D 39/20**, C04B 35/48, C04B 38/00, C22B 9/02, B22D 11/10

Cette demande a été déposée le 27 - 09 - 1991 comme demande divisionnaire de la demande mentionnée sous le code INID 60.

(30) Priorité: **19.03.86 FR 8603888**

(43) Date de publication de la demande:
**15.01.92 Bulletin 92/03**

(60) Numéro de publication de la demande initiale en application de l'article 76 CBE : **0 243 217**

(84) Etats contractants désignés:
**AT BE CH DE ES FR GB GR IT LI LU NL SE**

(71) Demandeur: **CERAMIOUES ET COMPOSITES Les Miroirs - Défense 3, 18, avenue d'Alsace F-92400 Courbevoie(FR)**

(72) Inventeur: **Minjolle, Louis
12, rue de l'Abreuvoir
F-92400 Courbevoie(FR)**

(74) Mandataire: **Dubruc, Philippe et al
RHONE-POULENC CHIMIE Service
IOM/BREVETS, 25,quai Paul Doumer
F-92408 Courbevoie(FR)**

(54) **Filtre pour métaux liquides à base de matériau céramique alvéolaire, son procédé de préparation et son application à la filtration de métaux ou d'alliages liquides de très haut point de fusion.**

(57) Filtre pour métaux liquides à base de matériau céramique alvéolaire constitué de mullite et de zircone.

Application à la filtration de métaux ou d'alliages liquides de très haut point de fusion.

La présente invention vise un filtre pour métaux liquides à base de matériau céramique alvéolaire, son procédé de préparation et son application à la filtration de métaux ou d'alliages liquides de très haut point de fusion tels que les aciers, la fonte et les alliages métalliques réfractaires.

Il est connu d'utiliser des filtres en céramiques alvéolaires à base de zircone ou d'alumine pour la filtration de métaux ou alliages liquides de très hauts points de fusion.

Ces filtres présentent l'inconvénient d'être trop onéreux et d'être souvent fragiles thermiquement.

Il est connu d'utiliser dans l'industrie automobile des filtres de prix moindre en cordierite ou en mélange cordierite-mullite alvéolaire sous forme de disques ou de mousses; la température d'emploi de tels fibres est cependant limitée à 1500˚C environ, ce qui les rend inutilisables pour la filtration des aciers fondus nécessitant une température de 1650˚C environ.

Il est connu de par la demande WO 84/03056 d'utiliser des filtres du type billes de réfractaires (corindon) enrobées d'une couche de liant ($ZrO_2$, $SiO_2$...) pour filtrer des métaux fondus. Cependant, la résistance aux chocs thermiques de tels filtres, ne permet pas une utilisation correcte au-delà de 1600˚C.

La demanderesse a trouvé un nouveau filtre à base de matériau céramique alvéolaire de prix compétitif, présentant de bonnes propriétés de mouillage par les métaux liquides et de tenue aux chocs thermiques à très haute température, ce qui le rend apte à être utilisé à des températures voisines de 1800˚C.

Selon l'invention, ce filtre pour métaux liquides à base de matériau céramique alvéolaire de porosité frontale ouverte de 50 à 80% est caractérisé en ce que ledit matériau céramique est constitué de 10 à 20% de $SiO_2$, 50 à 60% de $Al_2O_3$ et 20 à 40% de $ZrO_2$, pourcentages exprimés en poids par rapport au poids total des trois oxydes, $Al_2O_3$ et $SiO_2$ étant associés en mullite $3Al_2O_3\ 2SiO_2$, le poids combiné de zircone et de mullite représentant au moins 90% du poids du matériau céramique.

Ledit filtre peut être obtenu en réalisant soit un mélange des trois oxydes $SiO_2$, $Al_2O_3$ et $ZrO_2$ selon un rapport pondéral $SiO_2/Al_2O_3/ZrO_2$ de 10 - 20/ 50 - 60/ 20 - 40, soit un mélange de mullite et de zircone selon un rapport pondéral mullite/zircone de 60 - 80/20 - 40 en mettant en forme ledit mélange pour lui donner une structure alvéolaire de porosité frontale ouverte de 50 à 80% et en conformant la matière alvéolaire ainsi obtenue à la configuration désirée du filtre préalablement ou postérieurement à une opération de cuisson-frittage à une température de l'ordre de 1650 à 1750˚C.

La composition de départ, à savoir le mélange $SiO_2$ + $Al_2O_3$ + $ZrO_2$ ou le mélange mullite-zircone se présente généralement sous forme de particules de l'ordre de 1 à 5$\mu$m.

L'opération de mise en forme est réalisée selon des méthodes bien connues, fonction de la structure alvéolaire désirée.

Ainsi, s'il s'agit de préparer des mousses, la méthode la plus classique consiste à préparer une suspension dans l'eau du mélange de départ (barbotine), l'extrait sec étant de l'ordre de 50 à 80%, généralement voisin de 65%, à y tremper une éponge organique à cellules ouvertes de porosité frontale adéquate, à essorer puis à faire cuire à une température de l'ordre de 1650 à 1750˚C; le produit obtenu est ensuite découpé à la forme désirée du filtre.

Un mode opératoire du même type est d'ailleurs décrit dans le brevet US n˚ 3 090 094.

S'il s'agit de préparer un filtre présentant une structure perforée de forme géométrique polygonale, on peut utiliser les procédés d'extrusion bien connus, notamment ceux décrits dans les brevets américains n˚ 3,905,743, n˚ 3,919,384... visant la réalisation de structures en nids d'abeilles à parois minces d'épaisseur constante, à partir du mélange d'oxydes ou de la composition précurseur dudit mélange additionné d'eau et d'adjuvants d'extrusion connus dans la technique.

L'eau est utilisée à raison de 8 à 12% en poids par rapport au poids d'oxydes.

Parmi les adjuvants classiques d'extrusion, on peut citer :

. les plastifiants tels que des gels ou des colles organiques du type alcool polyvinylique, carboxyméthylcellulose..., utilisés à raison de 0 à 3% par rapport au poids d'oxydes.

. les lubrifiants tels que des graisses, des huiles, des cires... utilisés à raison de 0 à 15% par rapport au poids d'oxydes;

Après l'opération de mise en forme, la matière non cuite obtenue est séchée pour en chasser l'eau libre, à une température de l'ordre de 60˚C à 90˚C, coupée à la forme et à la dimension désirées du filtre, puis cuite à une température suffisante et pendant une durée suffisante pour donner une céramique frittée.

Cette opération de cuisson et de frittage est de préférence réalisée à une température de 1650 à 1750˚C en restant de 15 minutes à 2 heures à cette température.

On peut ainsi obtenir un filtre constitué d'un matériau présentant les caractéristiques suivantes :

. un coefficient de dilatation linéaire inférieur à 6,5 $10^{-6}/$˚C entre 20 et 1000˚C;

. une porosité ouverte de 0 à 30%;

. une densité apparente de l'ordre de 2,6 à 3,8.

De telles caractéristiques rendent le filtre particulièrement apte à la filtration de métaux ou d'alliages métalliques liquides de très haut point de fusion, notamment pour la filtration de métaux ou alliages tels que l'acier dont la coulée s'effectue vers 1650°C, et voire même jusqu'à 1800°C.

Ledit filtre se présente sous la forme classique des filtres en céramiques alvéolaires, par exemple sous forme de plaques carrées, de disques... dont les dimensions sont fonction de la quantité de métal ou d'alliage à filtrer par unité de temps et de la capacité de la boîte de filtration dans laquelle il est disposé; l'épaisseur dudit filtre est généralement de l'ordre de 5 à 15 mm.

Lorsque celui-ci présente une structure perforée de forme géométrique polygonale, il peut, par exemple, contenir de 35 à 50 canaux au $cm^2$ présentant une section carrée de 1 à 5 mm de côté.

La filtration des métaux ou alliages liquides à l'aide du filtre faisant l'objet de l'invention est effectuée selon des méthodes connues; elle permet de retenir les impuretés grossières mécaniquement et les inclusions non métalliques (oxydes, carbures, nitrures, halogénures...) physiquement par adsorption dans le réseau cellulaire du filtre même si la dimension desdites inclusions est inférieure à celle des pores dudit filtre.

Les exemples suivants sont donnés à titre indicatif et ne peuvent être considérés comme une limite du domaine et de l'esprit de l'invention.

EXEMPLE 1

On soumet un mélange de 30,5% en poids de zircone $SCCA_4$ (Magnésium Electron G.B), 17% en poids de $SiO_2$ et 52% en poids de $Al_2O_3$, $SiO_2$ et $Al_2O_3$ étant apportés sous forme de mullite électrofondue (grade 150 de Cadwoods Refractories G.B.), à un broyage dans un broyeur à boulets (ou dans un broyeur vibrant) jusqu'à obtenir des particules de diamètre moyen de l'ordre de $2\mu m$.

On prépare une formule d'extrusion constituée de :

- 79,6% en poids de particules du mélange ci-dessus préparé;
- 9,6% en poids de vaseline technique 910 commercialisée par la Société Gerland;
- 1,2% en poids d'alcool polyvinylique Rhodoviol PS 125 commercialisé par Rhône-Poulenc;
- et 9,6% en poids d'eau.

Cette formule est empâtée dans un malaxeur classique de l'industrie céramique (par exemple du type pétrin, malaxeur muni de bras en Z ou malaxeur à meules).

La charge ainsi obtenue est extrudée sous une pression d'environ 200 bars avec une vitesse de 5 cm/s à l'aide d'une boudineuse ou d'une presse à vis munie d'une matrice d'extrusion pour structure en nids d'abeilles comportant des fentes de décharge interconnectées uniformément séparées, formant à la sortie une grille de forme carrée de 51 mm de côté comportant des mailles carrées de 1,5 mm de côté et espacées de 0,34 mm.

La structure uniforme résultante est ensuite séchée à une température de 90°C.

La structure séchée ayant pris du retrait est ensuite découpée, sous forme de parallélépipèdes de base carrée de 49 mm de côté et de hauteur égale à 11 mm puis cuite dans un four à gaz à 1700°C pendant 2 heures.

Le filtre obtenu présente les propriétés et les caractéristiques suivantes :

Propriétés chimiques du matériau :

- composition minéralogique :
  $ZrO_2$   : 30%
  mullite   : 70%
- composition chimique :
  $ZrO_2$ + impuretés de $HfO_2$
  : 30,5%
  $Al_2O_3$
  : 52%
  $SiO_2$
  : 17%
  autres oxydes
  : 0,5%

Propriétés physiques du matériau :

- densité apparente
  : 3,23
- porosité ouverte
  : 15%
- coefficient de dilatation linéaire entre 20 et 1000°C
  : 6 $10^{-6}/°C$

Caractéristiques du filtre :

- encombrement
  : 44,5 x 44,5 mm x mm
- épaisseur
  : 10 mm
- épaisseur des parois
  : 0,3 mm
- section de passage des canaux
  : 1,3 x 1,3 mm x mm
- section de passage du filtre
  : 14 $cm^2$
- nombre de canaux au $cm^2$
  : 39
- porosité frontale ouverte
  : 66%

Ces propriétés et caractéristiques permettent l'utilisation dudit filtre pour la filtration de fonte à graphite sphéroïdal utilisée pour la fabrication de culasses pour moteurs Diesel.

EXEMPLE 2

On prépare une formule constituée de :
- 30,5 parties en poids de zircone SCC/A$_4$ ;
- 17,5 parties en poids de SiO$_2$ (Sable de Nemours broyé à 2$\mu$);
- 52 parties en poids d'alumine A 15 (Société Alcoa), à laquelle on ajoute :
    . 12,1 parties en poids de vaseline technique 910
    . 1,5 partie en poids d'alcool polyvinylique Rhodoviol PS 125
    . 12,5 parties d'eau.

On soumet cette formule aux opérations d'empâtage, séchage, découpage et cuisson-frittage décrites à l'exemple 1.

Le filtre obtenu présente des propriétés et des caractéristiques identiques à celles du filtre de l'exemple 1.

**Revendications**

1. Filtre pour métaux liquides à base de matériau céramique alvéolaire de porosité frontale ouverte de 50 à 80%, caractérisé en ce que ledit matériau est constitué de 10 à 20% de SiO$_2$, 50 à 60% de Al$_2$O$_3$ et de 20 à 40% de ZrO$_2$, pourcentages exprimés en poids par rapport au poids total des trois oxydes, Al$_2$O$_3$ et SiO$_2$ étant associés en mullite 3Al$_2$O$_3$ 2SiO$_2$, le poids combiné de zircone et de mullite représentant au moins 90% du poids du matériau céramique.

2. Procédé de préparation du filtre faisant l'objet de la revendication 1 à base des oxydes SiO$_2$, Al$_2$O$_3$ et ZrO$_2$ comprenant la mise en forme d'un mélange de ces oxydes, pour lui donner une structure alvéolaire de porosité frontale ouverte de 50% à 80%, puis la mise en conformité de la matière alvéolaire à la configuration désirée du filtre antérieurement ou postérieurement à une opération de cuisson-frittage à une température de 1650°C à 1750°C, caractérisé en ce que l'on utilise :
   - soit un mélange réalisé à partir des trois oxydes séparés SiO$_2$, Al$_2$O$_3$ et ZrO$_2$ selon un rapport pondéral SiO$_2$/Al$_2$O$_3$/ZrO$_2$ de 10-20/50-60/20-40;
   - soit un mélange réalisé à partir de mullite et de zircone selon un rapport pondéral mullite/zircone de 60-80/20-40.

3. Procédé selon la revendication 1 ou 2, caractérisé en ce que l'opération de mise en forme est réalisée à l'aide d'un dispositif d'extrusion pour structures perforées.

4. Procédé selon la revendication 3, caractérisé en ce que ledit dispositif est un dispositif d'extrusion pour structures en nids d'abeilles.

5. Procédé selon la revendication 3 ou 4, caractérisé en ce que l'opération de mise en conformité de la matière alvéolaire avec la configuration désirée du filtre est réalisée par découpe préalablement à l'opération de cuisson-frittage.

6. Procédé selon la revendicatin 2 ou 3, caractérisé en ce que l'opération de mise en forme est réalisée par imprégnation d'une éponge organique à cellules ouvertes par le mélange d'oxydes ou le mélange de mullite et de zircone, et en ce que la mise en conformité de la matière alvéolaire avec la configuration désirée du filtre est réalisée par découpe postérieurement à l'opération de cuisson-frittage.

7. Procédé de filtration de métaux ou d'alliages liquides par coulée à une température de l'ordre de 1650°C à 1800°C sur un filtre caractérisé en ce que ledit filtre est à base d'un matériau céramique alvéolaire faisant l'objet de la revendication 1.